# EUROPÄISCHE PATENTSCHRIFT

(11) **EP 2 212 089 B1**
(45) Veröffentlichungstag und Bekanntmachung des Hinweises auf die Patenterteilung: **13.03.2019**
(21) Anmeldenummer: 08841993.2
(22) Anmeldetag: 17.10.2008
(51) Int. Cl.: B29C 47/06, B29C 47/86

(54) **EXTRUSIONSWERKZEUG UND VERFAHREN ZUM KÜHLEN EXTRUDIERTER KUNSTSTOFFPROFILE**
EXTRUSION DIE AND METHOD FOR COOLING AN EXTRUDED PLASTIC PROFILE
FILIÈRE D'EXTRUSION ET PROCÉDÉ POUR REFROIDIR DES PROFILÉS EXTRUDÉS DE MATIÈRE PLASTIQUE

(30) Priorität: 22.10.2007 DE 102007050291
(43) Veröffentlichungstag der Anmeldung: 04.08.2010
(73) Patentinhaber: battenfeld-cincinnati Germany GmbH, 32547 Bad Oeynhausen (DE)
(72) Erfinder: HACKL, Leopold, A-3434 Katzelsdorf (AT)
(86) Internationale Anmeldenummer: PCT/EP2008/064082
(87) Internationale Veröffentlichungsnummer: WO 2009/053320

(56) Entgegenhaltungen:
- WO-A-2006/050549
- DE-A1-102005 031 747
- GB-A- 2 060 474
- JP-A- S 565 750
- JP-A- 62 060 626
- US-A- 3 907 961
- US-A- 4 484 883

## Beschreibung

Die Erfindung betrifft ein Extrusionswerkzeug zum Extrudieren von Kunststoffprofilen, vorzugsweise Kunststoffrohren, der plastifizierte Kunststoffmasse zuführbar ist und die mehrere Ringkanäle aufweist, die über eine Zusammenfließstelle zu einem gemeinsamen Schmelzekanal vereinigt werden.

Weiterhin betrifft die Erfindung ein diesbezügliches Verfahren.
Zur Herstellung von Rohren wird Kunststoff in einem Extruder aufgeschmolzen und durch ein entsprechendes Werkzeug gepresst. In einer anschließenden Kalibrierung wird der so erzeugte Außendurchmesser eingefroren und in Wassersprühbädern oder -vollbädern dem Kunststoff über die Außenoberfläche die Wärme entzogen. Dabei muß die gesamte Wärme durch die Kunststoffwand nach außen geleitet werden, wo sie dann vom Kühlwasser abgeleitet wird. Mit zunehmender Rohrwanddicke wird die Kühllänge überproportional länger, da der Kunststoff ein schlechter Wärmeleiter ist. Hinzu kommt, dass die Temperatur im Inneren des Rohres lange auf einem hohen Niveau bleibt und der Kunststoff ausreichend Zeit hat, aufgrund der Schwerkraft nach unten abzurinnen. Die Folge ist, dass die Rohrwanddicke im oberen Bereich immer kleiner als im unteren Bereich ist.

Dieser Prozeß hat mit zunehmender Rohrwanddicke also zwei Nachteile. Die Kühllänge wird überproportional länger und der Kunststoff rinnt an der Innenwand ab, die Folge ist eine ungleiche Wanddickenverteilung. Um diese Nachteile zu verringern, sind mehrere Systeme einer Rohrinnenkühlung wie aus der EP 795 389 bekannt. Diese Systeme sind in ihrer Wirkungsweise jedoch sehr eingeschränkt. Da das Rohr sowohl außen als auch innen gekühlt wird, wird sowohl die Außenkontur als auch die Innenkontur eingefroren. Wenn nun die Schmelze in der Mitte der Rohrwand durch Wärmeableitung nach außen und innen erstarrt, entstehen durch die starke Volumenreduzierung beim Übergang vom schmelzeförmigen in den festen Zustand Lunker. Diese Gefahr wird mit dicker werdenden Rohrwandstärken größer.

Aus der JP 56-005 750 A ist eine Vorrichtung zur Extrusion von Kunststoffprofilen bekannt, der plastifizierte Kunststoffmasse zuführbar ist und die mehrere Ringkanäle aufweist, die zu einem gemeinsamen Schmelzekanal vereinigt werden. Um diese Ringkanäle sind Kühlkanäle angeordnet.

Aus der DE 10 2005 031 747 A1 sind ein Verfahren zur Innenkühlung hohler Kunststoffprofile und ein Extruder zur Herstellung hohler Kunststoffprofile bekannt. Hierbei wird die Innenkühlung dadurch erreicht, dass in den Innenraum des Hohlprofiles ein Kühlgas geleitet wird, wobei das Kühlgas in einem Ranqueschen Wirbelrohr erzeugt wird.

Weiterhin beschreibt zum Beispiel die JP 62 060626 A ein Werkzeug für die Multilayer Extrusion bei der die einzelnen Schichten im Werkzeug separat zugeführt und separat temperiert werden können. Aus der WO 2006/050549 A2 ist ein Vorrichtung zur Erzeugen von Hohlprofilen bekannt bei der im Schmelzekanal Kühlblöcke angeordnet sind, um den Abstimmungsaufwand zu minimieren.

**Aufgabe** der vorliegenden Erfindung ist es, eine Vorrichtung sowie ein Verfahren anzubieten, bei dem die Wärme möglichst gleichmäßig über die gesamte Wanddicke des Rohres abgeführt werden kann.

Diese Aufgabe wird durch ein Extrusionswerkzeug gemäß Anspruch 1 gelöst.

Es wird also der vom Extruder kommende Schmelzestrang im Verteilbereich auf mehrere Ringkanäle aufgeteilt, wobei die Anzahl der Ringkanäle je nach Rohrwanddicke variieren kann. Bereits bevor das eigentliche Rohr extrudiert wird, wird der Kunststoffschmelze ein Anteil Wärme entzogen.
Vorteilhafterweise sind die Ringkanäle konzentrisch ausgeführt, wobei vorgesehen ist, dass zumindestens der relative Abstand zwischen den Ringkanälen weitgehendst gleich ist. Dies ist daher sinnvoll, damit die vorhandene Masse des Werkzeuges, z.B. des Stahles, ebenfalls weitgehendst gleich ist und somit zwischen den einzelnen Ringkanälen keine unterschiedliche Wärmeleitung vorhanden ist. Bei dieser Ausführung kann sichergestellt werden, dass eine relativ gleichmäßige Kühlung auf die Kunststoffmasse wirkt.
Jedem der Zuführkanäle im Verteilbereich kann ein Extruder zugeordnet werden, wodurch auf einfachste Weise Mehrschichtrohre gefertigt werden können. Es können unterschiedliche aber auch gleiche Materialien in den Extrudern bereitgestellt werden.

Die verfahrenstechnische Aufgabe wird durch ein Verfahren gemäß Anspruch 5 dadurch **gelöst**, dass folgende Schritte ausgeführt werden: a) Zuführen von Kunststoffmasse aus einem oder mehreren Extrudern in einen Zuführkanal, b) wobei die aus der einem Zuführkanal zugeführte Kunststoffmasse in einem Verteilbereich in Teilströme aufgeteilt wird, c) Weiterleiten der Kunststoffmasse in mindestens zwei Ringkanäle, die sich in einem Kühlbereich des Werkzeuges befinden, d) Kühlen der Kunststoffmassen mittels um die Ringkanäle angeordneter Kühlkanäle, e) Vereinigen der vorgekühlten Teilströme an einer Zusammenfließstelle zu einem Gesamtschmelzestrom in einem Schmelzekanal, f) Ausformen des gewünschten Kunststoffproduktes, g) Zuführen des gebildeten Kunststoffproduktes einer Kühl- und Kalibrierstation.

Den Teilströmen in den Ringkanälen wird über die Kühlkanäle Wärme entzogen. Wie bereits oben erwähnt, kann auf diese Art der sehr heißen Kunststoffmasse, bevor das eigentliche Kunststoffprofil erzeugt wird, bereits ein Großteil Wärme entzogen werden, die bei der Plastifizierung notwendigerweise eingebracht wurde.

Hierbei ist jedoch wichtig, dass in den Teilströmen nur so viel Wärme entzogen wird, dass die zugeführte Kunststoffmasse in dem Gesamtschmelzestrom noch eine homogene Masse bildet. Würde der Kunststoffmasse zu viel Wärme entzogen und bereits in den Ringkanälen eine Außenhaut bilden, würde ein mehrschichtiges Rohr entstehen, welches an den Oberflächen aneinander klebt.

Fortbildungsgemäß ist daher vorgesehen, dass der Wärmeentzug in den Teilströmen über Mittel gesteuert und/oder geregelt wird. Hierbei kann die Regelung bzw. Steuerung direkt mit der Maschinensteuerung in Verbindung stehen, so dass bei Unterschreiten einer Mindesttemperatur im Schmelzestrang sofort die Kühlung in den Teilströmen reduziert wird. Hierbei ist es sogar denkbar, die Temperatur des Gesamtschmelzestromes im Schmelzekanal zu überwachen und in die Regelung bzw. Steuerung zu integrieren.

Mit dem vorgeschlagenen Verfahren bzw. der vorgeschlagenen Vorrichtung ist es möglich, insbesondere bei dickwandigen Rohren bereits im Werkzeug der Schmelze Wärme zu entziehen und somit die Kühlstrecke zu reduzieren und die Qualität des Produktes zu verbessern.

In den Zeichnungen sind zwei Ausführungsbeispiele der Erfindung schematisch dargestellt, es zeigt
- Fig. 1: einen Schnitt durch das Werkzeug und
- Fig. 2: den Gegenstand gemäß Figur 1 in einer alternativen Ausführung.

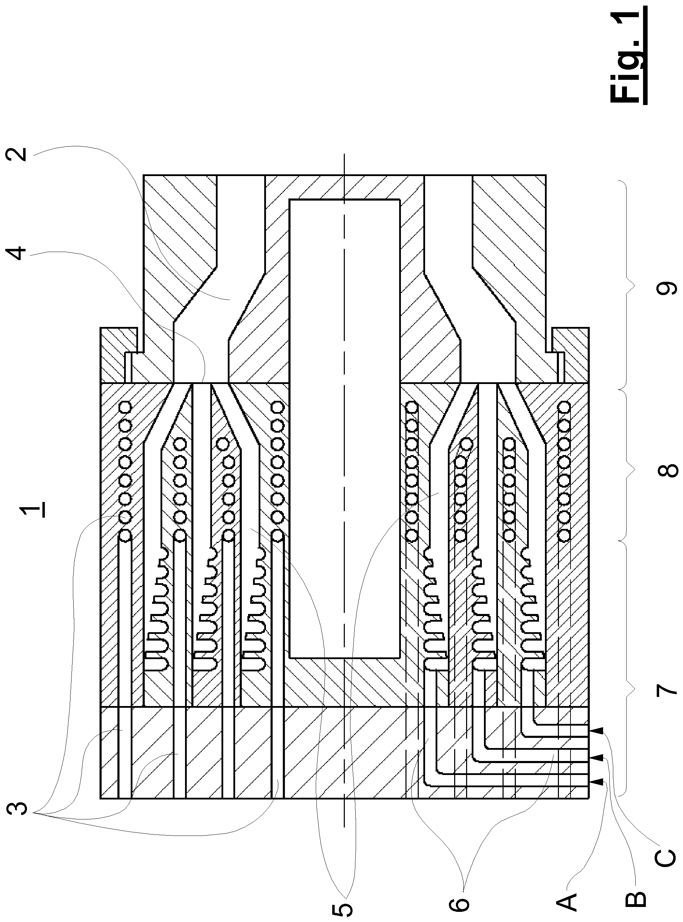

In Figur 1 ist ein Extrusionswerkzeug 1 dargestellt. Der eigentliche Schmelzekanal 2, mittels dem das Kunststoffprofil extrudiert wird, bildet den Schlußteil eines Gesamtwerkzeuges. Der Mittelteil des Werkzeuges 1 besteht aus mehreren Ringkanälen 5, die sich an einer Zusammenfließstelle 4 vereinigen und den Beginn des gemeinsamen Schmelzekanals 2 bilden. Die einzelnen Ringkanäle 5, die mit Zuführkanälen 6 in Verbindung stehen, werden mit plastifizierter Kunststoffmasse aus einem nicht dargestellten Extruder versorgt. Zwischen den Ringkanälen 5 sind Kühlkanäle 3 angeordnet, die mit einem ebenfalls nicht dargestellten Kühlkreislauf in Verbindung stehen. Die Kühlkanäle sind so angeordnet, dass sie der vorhandenen Materialmasse des Werkzeuges möglichst gleichmäßig Wärme entziehen können. Das Werkzeug teilt sich somit in die drei Funktionsbereiche Verteilbereich 7, an den die Schmelze aus dem oder den Extrudern an den Stellen A, B, C den Zuführkanälen 6 zugeführt wird, und auf die Ringkanäle 5 aufgeteilt wird, Kühlbereich 8, in dem die Ringkanäle 5 mit Kühlkanälen 3 versehen sind, und den Formgebungsbereich 9, in dem die vorgekühlte Schmelze zusammenfließt.

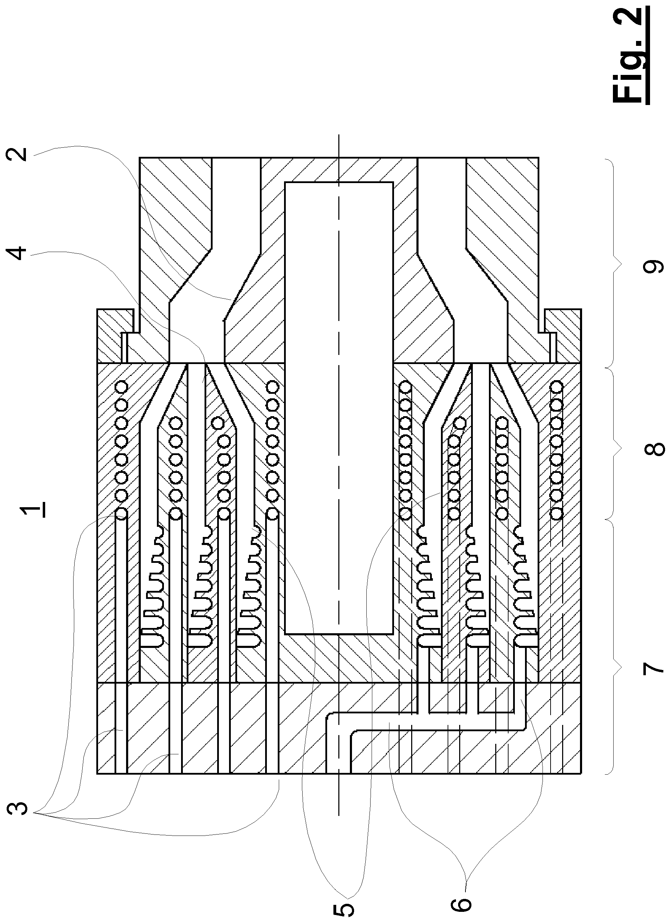

In Figur 2 ist ein erfindungsgemäßes Extrusionswerkzeug dargestellt. Sie unterscheidet sich zur Ausführung gem. Figur 1 dadurch, dass die Zuführung der Schmelze zentral, also nur über einen Extruder erfolgt. Es ist somit ein Schnitt durch das Werkzeug 1 dargestellt, in dem wieder der eigentliche Schmelzekanal 2 zu sehen ist, mittels dem das Kunststoffprofil extrudiert wird. Es bildet auch hier den Schlußteil eines Gesamtwerkzeuges. Auch hier besteht der Mittelteil des Werkzeuges 1 aus mehreren Ringkanälen 5, die sich an der Zusammenfließstelle 4 vereinigen und den Beginn des gemeinsamen Schmelzekanals 2 bilden. Die einzelnen Ringkanäle 5 stehen mit den Zuführkanälen 6 in Verbindung. Deutlich ist zu erkennen, dass die Zuführkanäle 6 von einem nicht dargestellten Extruder zentrisch angeströmt werden und dann auf die drei Wendelverteiler aufgeteilt werden. Auch hier sind zwischen den Ringkanälen 5 Kühlkanäle 4 angeordnet, die mit einem ebenfalls nicht dargestellten Kühlkreislauf in Verbindung stehen. Selbstverständlich sind die Kühlkanäle wieder so angeordnet, dass sie der vorhandenen Materialmasse des Werkzeuges möglichst gleichmäßig Wärme entziehen können. Auch hier teilt sich das Werkzeug 1 in die drei Funktionsbereiche Verteilbereich 7, Kühlbereich 8 und Formgebungsbereich 9 auf.

Es sei angemerkt, dass sowohl gem. der Ausführung nach Figur 1 als auch gem. Ausführung nach Figur 2 jeder Ringkanal 5 mit ein und derselben Kunststoffmasse oder aber auch mit unterschiedlichen Kunststoffmassen beaufschlagt werden kann. Hierzu ist lediglich der Zuführkanal 6 zu modifizieren, dass jeder Zuführkanal beispielsweise einem eigenen Extruder zugeordnet ist. Es können somit beispielsweise unterschiedliche Farbschichten im Rohr erzeugt werden oder auch zwei Materialien mit unterschiedlichen Eigenschaften gefertigt werden. Es ist somit beispielsweise möglich, den mittleren Teil mit einem Recyclat zu beaufschlagen, welches dann im Fertigteil von beiden Seiten mit hochwertigerem Material umschlossen ist.

Mit dem vorgeschlagenen Verfahren und dem vorgeschlagenen Extrusionswerkzeug ist es damit vereinfacht möglich, gleichmäßig Wärme über die gesamte Wanddicke des Rohres abzuführen.

### Bezugszeichenliste:

- 1: Werkzeug
- 2: Schmelzekanal
- 3: Kühlkanal
- 4: Zusammenfließstelle
- 5: Ringkanal
- 6: Zuführkanal zu 5
- 7: Verteilerbereich von 1
- 8: Kühlbereich von 1
- 9: Formgebungsbereich von 1

## Patentansprüche

1. **Extrusionswerkzeug** zum Extrudieren von Kunststoffprofilen, vorzugsweise Kunststoffrohren, **dem** plastifizierte Kunststoffmasse zuführbar ist und **das** mehrere Ringkanäle (5) aufweist, die über eine Zusammenfließstelle (4) zu einem gemeinsamen Schmelzekanal (2) vereinigt werden,
**dadurch gekennzeichnet, dass**
das Werkzeug (1) in drei Funktionsbereiche gegliedert ist,
wobei die drei Funktionsbereiche aus einem Verteilbereich (7), **der aus einem Zuführkanal (6) und mindestens zwei mit dem Zuführkanal (6) verbundenen Ringkanälen (5) besteht,**
einem Kühlbereich (8), wobei um die Ringkanäle (5) im Kühlbereich (8) Kühlkanäle (3) angeordnet sind und
einem Formgebungsbereich (9), **in dem die vorgekühlte Schmelze zusammenfließt, bestehen.**

2. Vorrichtung nach Anspruch 1, **dadurch gekennzeichnet, dass** die Ringkanäle (5) konzentrisch ausgeführt sind.

3. Vorrichtung nach Anspruch 2, **dadurch gekennzeichnet, dass** der relative Abstand zwischen den Ringkanälen (5) weitgehend gleich ist.

4. Vorrichtung nach einem der vorigen Ansprüche, **dadurch gekennzeichnet, dass** jedem Zuführkanal (6) im Verteilbereich (7) ein Extruder zugeordnet ist.

5. Verfahren zum Extrudieren von Kunststoffprofilen, vorzugsweise Kunststoffrohren, das folgende Schritte umfasst:
a) Zuführen von Kunststoffmasse aus einem oder mehreren Extrudern in einen Zuführkanal (6),
b) wobei die **aus dem einem Zuführkanal (6)** zugeführte Kunststoffmasse in einem Verteilbereich (7) in Teilströme aufgeteilt wird,
c) Weiterleiten der Kunststoffmasse in mindestens zwei Ringkanäle (5), die sich in einem Kühlbereich (8) des Werkzeuges (1) befinden,
d) Kühlen der Kunststoffmassen mittels um die Ringkanäle (5) angeordneter Kühlkanäle (3),
e) Vereinigen der vorgekühlten Teilströme an einer Zusammenfließstelle (4) zu einem Gesamtschmelzestrom in einem Schmelzekanal (2),
f) Ausformen des gewünschten Kunststoffproduktes,
g) Zuführen des gebildeten Kunststoffproduktes einer Kühl- und Kalibrierstation.

6. Verfahren nach Anspruch 5, **dadurch gekennzeichnet, dass** den Teilströmen nur so viel Wärme entzogen wird, dass die zugeführte Kunststoffmasse im Gesamtschmelzestrom eine homogene Masse bildet.

7. Verfahren nach Anspruch 6, **dadurch gekennzeichnet, dass** der Wärmeentzug in den Teilströmen gesteuert und/oder geregelt wird.

8. Verfahren nach einem der vorigen Ansprüche, **dadurch gekennzeichnet, dass** die eigentliche Formgebung des gewünschten Kunststoffproduktes, vorzugsweise des Kunststoffrohres, im Formgebungsbereich (9) des Werkzeuges (1) erfolgt.

## Claims

1. **Extrusion die** for extruding plastic profiles, preferably plastic pipes, to which plasticized plastic mass can be supplied, and which comprises several ring channels (5) which are combined in a single melt channel (2) within a merging area (4),
**characterized in that**
the die (1) is divided into three functional areas,
the functional areas comprising a distribution area (7), **which in turn comprises a supply channel (6) and at least two ring channels (5) connected to the supply channel (6),**
a cooling area (8), cooling channels (3) being arranged around the ring channels (5) within the cooling area (8),
and a shaping area (9) **in the precooled melt flows together.**

2. Apparatus according to claim 1, **characterized in that** the ring channels (5) are arranged concentrically.

3. Apparatus according to claim 2, **characterized in that** the relative distance between the ring channels (5) is widely equal.

4. Apparatus according to one of the preceding claims, **characterized in that** an extruder is associated with each supply channel (6) within the distribution area (7).

5. Process for extruding plastic profiles, preferably plastic pipes, which comprises the following steps:
a) Supplying a plastic mass from one or more extruders to a supply channel (6),
b) the plastic mass supplied **via the single supply channel (6)** being divided into partial melts within a distribution area (7),
c) transporting the plastic mass into at least two ring channels (5) which are located within a cooling area (8) of the die (1),
d) cooling of the plastic masses by means of cooling channels (3) arranged around the ring channels (5),
e) combining the precooled partial melts to a total melt stream in a melt channel (2) within a merging area (4),
f) Shaping the desired plastic product,
g) Supplying the shaped plastic product to a cooling and calibrating station.

6. Process according to claim 5, **characterized in that** the partial melts are deprived only of as much heat as necessary for the plastic melt supplied to the combined melt stream to form a homogeneous mass.

7. Process according to claim 6, **characterized in that** the extraction of heat from the partial melts is regulated and/or controlled.

8. Process to one of the preceding claims, **characterized in that** the actual shaping of the desired plastic product, preferably a plastic pipe, is realized within the shaping area (9) of the die (1).

## Revendications

1. Dispositif d'extrusion pour extruder des profiles en plastique, de préférence des tubes en plastique, **auquel** de la masse plastique peut être amenée et **qui** présente plusieurs canaux annulaires (5) qui sont réunis en un canal pour masse en fusion (2) dans une zone de confluence,
**caractérisé en ce que**
le dispositif (1) est divisé en trois zones fonctionnelles,
lesdites zones fonctionnelles comprenant une zone de répartition (7) **qui à son tour comprend un canal d'alimentation (6) et au moins deux canaux annulaires (5) reliés au canal d'alimentation (6),**
une zone de refroidissement (8), des canaux de refroidissement (3) étant arrangés autour les canaux annulaires (5) dans la zone de refroidissement (8), et
une zone de façonnage (9) **dans laquelle la matière fondue prérefroidie conflue.**

2. Dispositif selon la revendication 1, **caractérisé en ce que** les canaux annulaires (5) sont concentriques.

3. Dispositif selon la revendication 2, **caractérisé en ce que** la distance relative entre les canaux annulaires (5) est largement pareille.

4. Dispositif selon l'une quelconque des revendications précédentes, **caractérisé en ce qu'**une extrudeuse est associée à chaque canal d'alimentation (6) dans la zone de répartition (7).

5. Procédé d'extrusion de profiles en plastique, de préférence de tubes en plastique, qui comprend les étapes suivantes :
a) Alimentation de masse en plastique d'un ou plusieurs extrudeuses à un canal d'alimentation (6),
b) la masse en plastique acheminée **du seul canal d'alimentation** (6) est divisée en flux partiels dans une zone de répartition (7),
c) transmission de la masse en plastique dans au moins deux canaux annulaires (5) qui se trouvent dans une zone de refroidissement (8) du dispositif (1),
d) refroidissement des masses en plastiques au moyen de canaux de refroidissement (3) arrangés autour des canaux annulaires (5),
e) combinaison des flux partiels prérefroidis dans une zone de confluence (4) en un seul flux total de matière fondue dans un canal pour matière fondue (2),
f) façonnage du produit en plastique désiré,
g) alimentation du produit en plastique formé à une station de refroidissement et de calibration.

6. Procédé selon la revendication 5, **caractérisé en ce que** la chaleur est extrait des flux partiels de telle manière que la matière fondue forme une masse homogène dans le flux total de matière fondue.

7. Procédé selon la revendication 6, **caractérisé en ce que** l'extraction de chaleur des flux partiels est réglée et/ou contrôlée.

8. Procédé selon l'une quelconque des revendications précédentes, **caractérisé en ce que** le vrai façonnage du produit en plastique désiré, de préférence du tube en plastique, se fait dans la zone de façonnage (9) du dispositif (1).
